# EUROPÄISCHE PATENTSCHRIFT

(11) **EP 3 456 892 B1**
(45) Veröffentlichungstag und Bekanntmachung des Hinweises auf die Patenterteilung: **21.06.2023**
(21) Anmeldenummer: 17191575.4
(22) Anmeldetag: 18.09.2017
(51) Int. Cl.: E04B 1/26, F16B 21/09, F16B 15/00, F16B 12/14, F16B 12/26, F16B 5/07

(54) **VERBINDER FÜR ZWEI WERKSTÜCKE**
CONNECTOR FOR TWO WORKPIECES
CONNECTEUR POUR DEUX PIÈCES À ASSEMBLER

(43) Veröffentlichungstag der Anmeldung: 20.03.2019
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- DE-B3- 10 227 661
- DE-B3- 10 326 196
- GB-A- 1 087 401

## Beschreibung

Die vorliegende Erfindung betrifft einen Verbinder für zwei Werkstücke, insbesondere aus Holz, mit einem ersten und einem zweiten Beschlag, welche mit ihren einen Seiten an je einem der Werkstücke montierbar und mit ihren anderen Seiten aneinander verankerbar sind und zwischen den einen und den anderen Seiten jeweils einen umlaufenden Rand haben, wobei zumindest der erste Beschlag an seiner anderen Seite eine Nase mit einer Hinterschneidung und der zweite Beschlag einen von seinem Rand ausgehenden, mit der Hinterschneidung korrespondierenden Schlitz zum Verankern der Nase hat, und wobei zumindest einer der Beschläge an seiner anderen Seite einen quer zur Richtung des Schlitzes verlaufenden Vorsprung zum Anliegen des Randes des jeweils anderen Beschlags in der im Schlitz verankerten Stellung der Nase hat.

Ein Verbinder bestehend aus einem Block mit konischer T-Nut und einem in die Nut einschiebbaren T-förmigen Konusteil mit Endanschlag für eine Stirnseite des Blocks ist ferner aus der GB 1 087 401 A bekannt. Dieser Verbinder hat eine große Dicke, sodass ein entsprechender Abstand zwischen den Werkstücke vorzusehen ist, was die am Verbinder auftretenden und in die Werkstücke abzuleitenden Kräfte und Momente vergrößert.

Allgemeine Verbinder für zwei Werkstücke sind z.B. aus der EP 1 856 417 B1 bekannt und werden unter der Marke RICON^{®} S von der Firma Knapp GmbH, Euratsfeld, Österreich vertrieben. Sie eignen sich besonders zum Aufbau von Schwerlastverbindungen im Ingenieurholzbau, beispielsweise zum Verbinden von Haupt-, Neben- oder Querträgern, Querzügen, Bindern, Stützen, Pfosten, Wänden od.dgl. Die Beschläge sind meist aus Metall, z.B. hochfestem Aluminium, und die zu verbindenden Werkstücke aus Holz, beispielsweise Brettschichtholz (BSH), Leimbindern usw. Zumindest eines der Werkstücke kann alternativ beispielsweise aus Beton, Stein, Mauerwerk oder sogar Metall sein. EP1856417B1 offenbart einen Verbinder aufweisend alle Merkmale des Oberbegriffes des Anspruchs 1.

Die Erfindung setzt sich um Ziel, einen solchen Verbinder in Bezug auf seine Tragfähigkeit, Haltbarkeit und Baugröße weiter zu verbessern, sodass dieser bei gleichem Gewicht oder gleicher Baugröße dauerhaft größere Kräfte aufnehmen kann.

Dieses Ziel wird mit einem Verbinder der einleitenden Art erreicht, der sich gemäß der Erfindung dadurch auszeichnet, dass beide Beschläge identische Form haben oder zueinander spiegelsymmetrisch sind.

Bei einem solchen Verbinder tragen nicht alleine Nase und Schlitz die von den beiden Werkstücken auf den Verbinder wirkenden Kräfte, insbesondere Auflagekräfte, sondern ein zumindest maßgeblicher Teil davon wird durch den am Vorsprung jedes Beschlags anliegenden Rand des jeweils anderen Beschlags aufgenommen. Dadurch kann der Verbinder bei unverändert sicherer Verankerung der beiden Beschläge aneinander bei gleicher Baugröße höhere Kräfte bzw. bei geringerer Baugröße dieselben Kräfte aufnehmen. Ferner werden Aufbau und Handhabung des Verbinders wesentlich vereinfacht, insbesondere wenn die Beschläge identische Form haben.

Der Vorsprung kann dabei am jeweiligen Beschlag verschraubt sein. Besonders hohe Kräfte kann der Vorsprung jedoch aufnehmen, wenn er, wie bevorzugt, am Beschlag einstückig ausgeformt oder angeschweißt ist.

Günstig ist, wenn der Vorsprung quaderförmig ist und von Bohrungen zur Aufnahme von Schrauben zum Montieren an einem der Werkstücke durchsetzt ist. Dies führt zu einem zugleich kompakten und robusten Vorsprung, welcher direkt Kräfte auf das Werkstück übertragen kann. Vorteilhaft ist dabei, wenn zumindest eine der Bohrungen den Vorsprung unter einem zur einen Seite des Beschlags spitzen Winkel durchsetzt und der Vorsprung eine Fase hat, von welcher diese Bohrung ausgeht. Dies führt zu einer schrägen Krafteinleitung in das Werkstück und wirkt, insbesondere wenn das Werkstück aus Holz und der Beschlag daran stirnseitig montiert ist, einem Aufweiten oder Ausreißen der Stirnseite des Werkstücks entgegen. Infolge der Fase lassen sich Schrauben ferner einfacher eindrehen und haben einen besseren Sitz am Vorsprung.

In einer vorteilhaften Ausführungsform hat zumindest eine der Bohrungen an der einen Seite des Beschlags eine zylindrische Erweiterung. Die genannte zylindrische Erweiterung kann z.B. auf den Kopf einer vor Montage des Beschlags in das Werkstück eingedrehten Schraube aufgesetzt und der Beschlag auf diese Weise für die Montage am Werkstück sicher positioniert werden.

In einer vorteilhaften Variante ist der Vorsprung einstückig mit der Nase ausgebildet. Weitere Bauteile können dadurch entfallen.

In einer dazu alternativen Ausführungsform ist die Nase durch einen von der genannten anderen Seite vorspringenden Bolzen mit verbreitertem Kopf gebildet. Ein solcher Bolzen ist einfach herstellbar. Besonders belastbar ist der Bolzen, wenn er am ersten Beschlag angeschweißt oder angeschraubt ist. Dies führt zu einer hohen Tragfähigkeit der Verankerung am jeweils anderen Beschlag. In einer dazu alternativen Variante ist der Bolzen axialbeweglich am ersten Beschlag gelagert und mit seinem Kopf gegen die genannte eine Seite des ersten Beschlags federbeaufschlagt. Durch eine derartige Lagerung des Bolzens am ersten Beschlag können einerseits Ungenauigkeiten in den Werkstücken ausgeglichen und andererseits Stoßbelastungen, welche beispielsweise im Fall eines Erdbebens od.dgl. auftreten, von der Feder aufgenommen und dadurch von den Werkstücken ferngehalten werden, ohne dass der Verbinder Schaden nimmt.

Besonders günstig ist ferner, wenn die Beschläge im Wesentlichen kongruent sind und zum genannten Schlitz etwa parallele Randabschnitte haben, wobei an den Randabschnitten zumindest eines der Beschläge Wangen ausgebildet sind, zwischen welchen der jeweils andere Beschlag in der im Schlitz verankerten Stellung der Nase seitlich gehalten ist. Auf diese Weise können auch Lateralkräfte, z.B. Scherkräfte an den Werkstücken, zumindest teilweise von den Wangen aufgenommen und dadurch die Belastung der Nase somit weiter reduziert werden. Ferner könnte der Verbinder dadurch - entgegen seiner üblichen Montagerichtung mit senkrechtem Schlitz - schräg oder sogar waagrecht verwendet werden, ohne dass Nase und Schlitz überlastet werden.

Zum einfacheren Einschieben der Hinterschneidung der Nase in den Schlitz beim Verankern der beiden Beschläge aneinander hat bevorzugt der Schlitz eine V-förmige Mündung.

Die Erfindung wird nachfolgend anhand von in den beigeschlossenen Zeichnungen dargestellten Ausführungsbeispielen näher erläutert. In den Zeichnungen zeigen:
die Fig. 1a und 1b einen Beschlag (Fig. 1a) und einen erfindungsgemäßen Verbinder für zwei Werkstücke mit zwei solchen Beschlägen (Fig. 1b) jeweils in einer Perspektivansicht von schräg oben;
die Fig. 2a und 2b eine Variante des Verbinders von Fig. 1b in seiner Montagestellung ohne Werkstücke in Perspektivan- sicht von schräg oben (Fig. 2a) bzw. an zwei ausschnittsweise dargestellten Werkstücken in einer Seitenansicht (Fig. 2b);
die Fig. 3a bis 3c Varianten eines Vorsprungs des Verbinders der Fig. 1b, 2a oder 2b in einer Perspektivansicht von schräg oben (Fig. 3a), in einem Querschnitt (Fig. 3b) bzw. in einer Seitenansicht (Fig. 3c); und
die Fig. 4, 5, 6a und 6b weitere Ausführungsformen der Beschläge des erfindungsgemäßen Verbinders in einer Perspektivansicht von schräg oben (Fig. 4), einer Seitenansicht (Fig. 5) bzw. jeweils einer Perspektivansicht von schräg oben (die Fig. 6a und 6b).

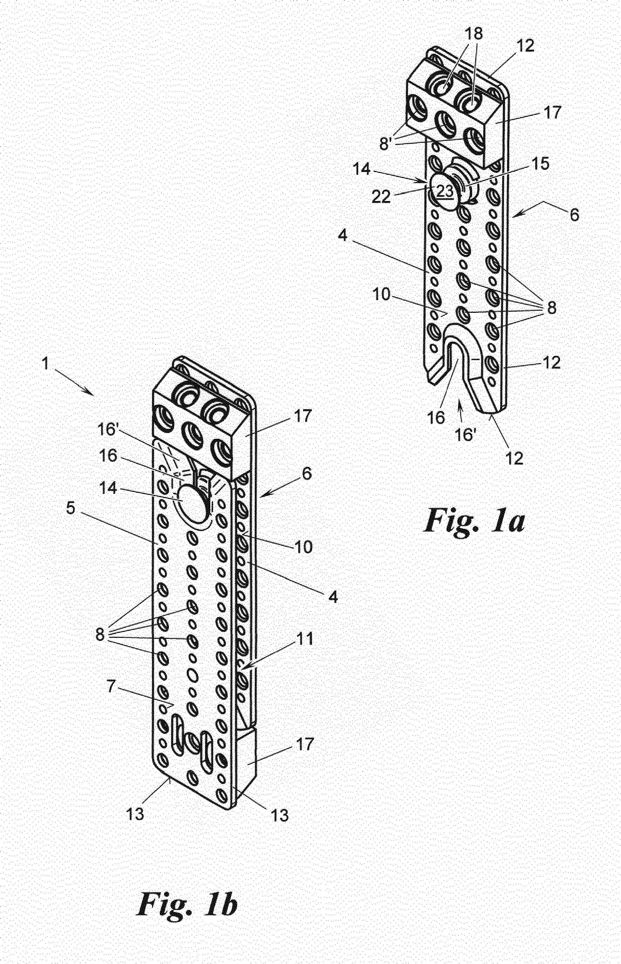

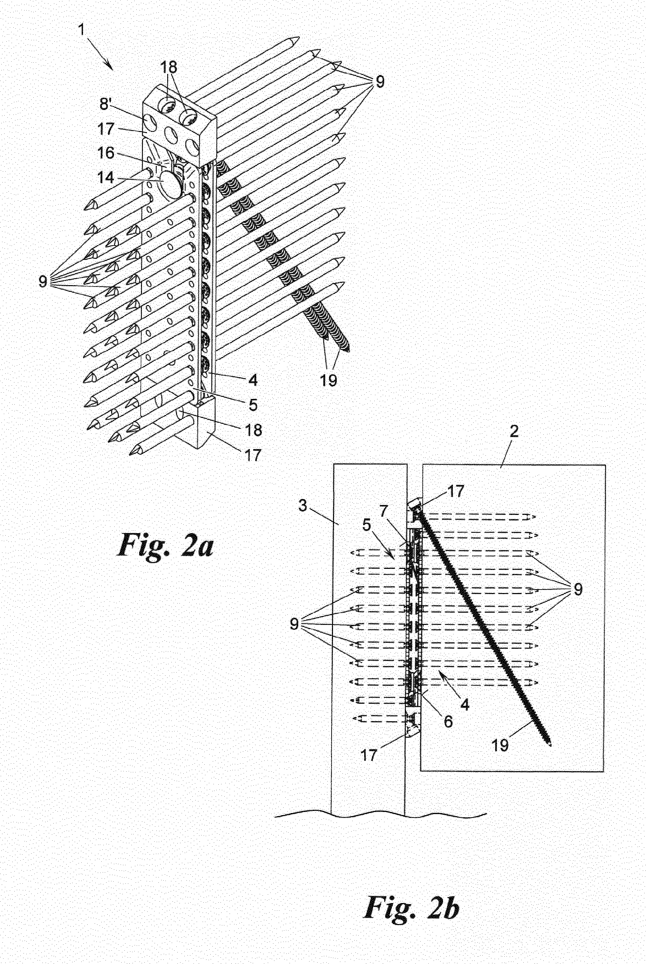

Die Fig. 1a, 1b, 2a und 2b zeigen Beispiele für einen Verbinder 1 für zwei Werkstücke 2, 3 aus Holz, insbesondere Brettschichtholz, aus Beton, Mauerwerk, Stein, Metall od.dgl., beispielsweise Träger und/oder Vertikalbauteile, z.B. Stützen, Pfosten oder Wände. Der Verbinder 1 hat einen ersten und einen zweiten Beschlag 4, 5. Der erste Beschlag 4 wird mit seiner einen Seite 6 an einem der Werkstücke 2, 3 und der zweite Beschlag 5 mit seiner einen Seite 7 am anderen der Werkstücke 2, 3 montiert. Dazu hat jeder der Beschläge 4, 5 beispielsweise Bohrungen 8 für Schrauben 9, Nägel, Stifte od.dgl., welche im jeweiligen Werkstück 2, 3 verankert werden.

Mit seiner anderen Seite 10 wird der erste Beschlag 4 an der anderen Seite 11 des zweiten Beschlags 5 verankert und die beiden Werkstücke 2, 3 auf diese Weise miteinander verbunden. Zwischen ihren einen und ihren anderen Seiten 6, 7, 10, 11 haben die beiden Beschläge 4, 5 jeweils einen umlaufenden Rand 12, 13.

Um die beiden Beschläge 4, 5 mit ihren anderen Seiten 10, 11 aneinander zu verankern, hat zumindest der erste Beschlag 4 an seiner anderen Seite 10 eine Nase 14 mit einer Hinterschneidung 15 und zumindest der zweite Beschlag 5 einen von seinem Rand 13 ausgehenden, mit der Hinterschneidung 15 korrespondierenden Schlitz 16, in welchem die Nase 14 des ersten Beschlags 4 durch Einschieben der Hinterschneidung 15 in den Schlitz 16 verankert wird. Es versteht sich, dass der erste Beschlag 4 jener sein kann, welcher am zu tragenden Werkstück 2, z.B. einem Träger, montiert wird, und der zweite Beschlag 5 jener, welcher am tragenden Werkstück 3, z.B. einem Pfosten, montiert wird, wie im Beispiel der Fig. 2b veranschaulicht, oder umgekehrt.

Zum leichteren Einschieben der Nase 14 mit ihrer Hinterschneidung 15 in den Schlitz 16 hat dieser optional eine V-förmige Mündung 16'. Der Schlitz 16 kann den zweiten Beschlag 5 von seiner einen Seite 7 bis zu seiner anderen Seite 11 durchsetzen, wie in den dargestellten Beispielen, oder andererseits bloß als Nut in der anderen Seite 11 des zweiten Beschlags 5 ausgeführt sein. Ferner kann der Schlitz 16 wie im Beispiel der Fig. 1a optional an die Form der Hinterschneidung 15 der Nase 14 angepasst - hier: abgeschrägt - und dabei, wenn gewünscht, an der anderen Seite 11 erhaben sein. Die Beschläge 4, 5 können weitgehend plattenförmig sein wie in den gezeigten Beispielen oder geeigneten anderen Querschnitt haben. Überdies können beide Beschläge 4, 5, wie im Beispiel der Fig. 1b, optional identische Form haben oder zueinander spiegelsymmetrisch sein, sodass sowohl der erste Beschlag 4 als auch der zweite Beschlag 5 jeweils eine Nase 14 mit Hinterschneidung 15 und einen Schlitz 16 zum Verankern der Nase 14 des jeweils anderen Beschlags 4, 5 haben.

Zumindest einer der Beschläge 4, 5 hat an seiner anderen Seite 10, 11 einen quer zur Richtung des Schlitzes 16 verlaufenden Vorsprung 17. An diesem Vorsprung 17 liegt der Rand 12, 13 des jeweils anderen Beschlags 4, 5 an, wenn die Nase 14 in ihrer im Schlitz 16 verankerten Stellung ist. Der Vorsprung 17 ist am jeweiligen Beschlag 4, 5 einstückig ausgeformt, z.B. durch Biegen oder Gießen, oder an diesem angeschweißt, z.B. an der genannten anderen Seite 10, 11 wie im Beispiel der Fig. 1a, oder an dessen Rand 12, 13 wie im Beispiel der Fig. 2a. Alternativ kann der Vorsprung 17 am jeweiligen Beschlag 4, 5 verschraubt oder durch Verankern am jeweiligen Werkstück 2, 3 durch die eine und die andere Seite 6, 7, 10, 11 des Beschlags 4, 5 durchsetzende Bohrungen 8' hindurch am Beschlag 4, 5 befestigt sein.

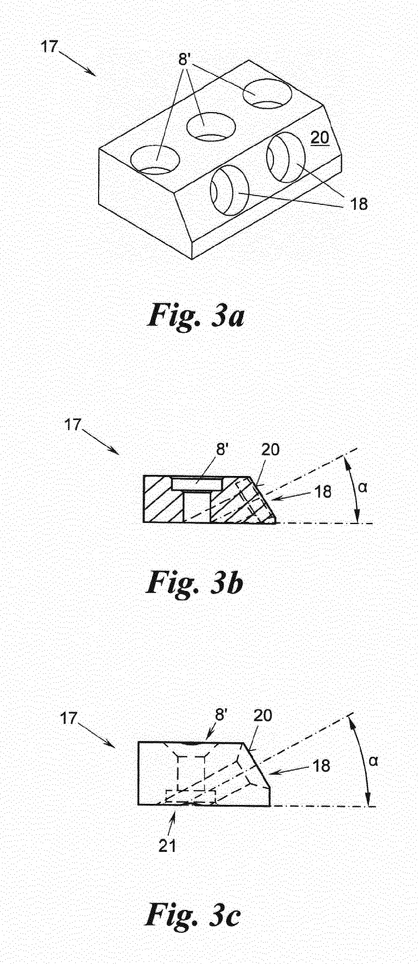

In den Ausführungsbeispielen der Fig. 3a bis 3c ist der Vorsprung 17 quaderförmig. Alternativ kann der Vorsprung 17 auch andere Form haben, die geeignet ist, den anliegenden Rand 12, 13 des anderen Beschlags 4, 5 zumindest abschnittsweise zu stützen. Dabei ist der Vorsprung 17 der in den Fig. 3a bis 3c dargestellten Beispiele von Bohrungen 8' für die Aufnahme von Schrauben 9 zum Montieren an einem der Werkstücke 2, 3 durchsetzt. In den Beispielen der Fig. 3a bis 3c hat der Vorsprung 17 optional zumindest eine Bohrung 18 (im Beispiel der Fig. 3a: zwei Bohrungen 18), welche den Vorsprung 17 unter einem zur genannten einen Seite 6, 7 des Beschlags 4, 5 spitzen Winkel α durchsetzt, um mithilfe von Schrauben 19 ein Schrägverschrauben des Beschlags 4, 5 mit dem Werkstück 2, 3 zu ermöglichen. Der Vorsprung 17 hat in diesem Beispiel eine optionale Fase 20, von welcher die schräge Bohrung 18 (hier: im rechten Winkel) ausgeht.

Die Bohrungen 8, 18 sind optional angesenkt, z.B. zylindrisch (Fig. 3b) oder kegelförmig (Fig. 3c). Im Ausführungsbeispiel der Fig. 3c hat ferner eine der Bohrungen 8' an der einen Seite 6, 7 des Beschlags 4, 5 eine zylindrische Erweiterung 21 zur Aufnahme eines Kopfes einer im Werkstück 2, 3 vorbereitend eingedrehten Positionierschraube bzw. eines Positionierstiftes (nicht dargestellt) für den Beschlag 4, 5.

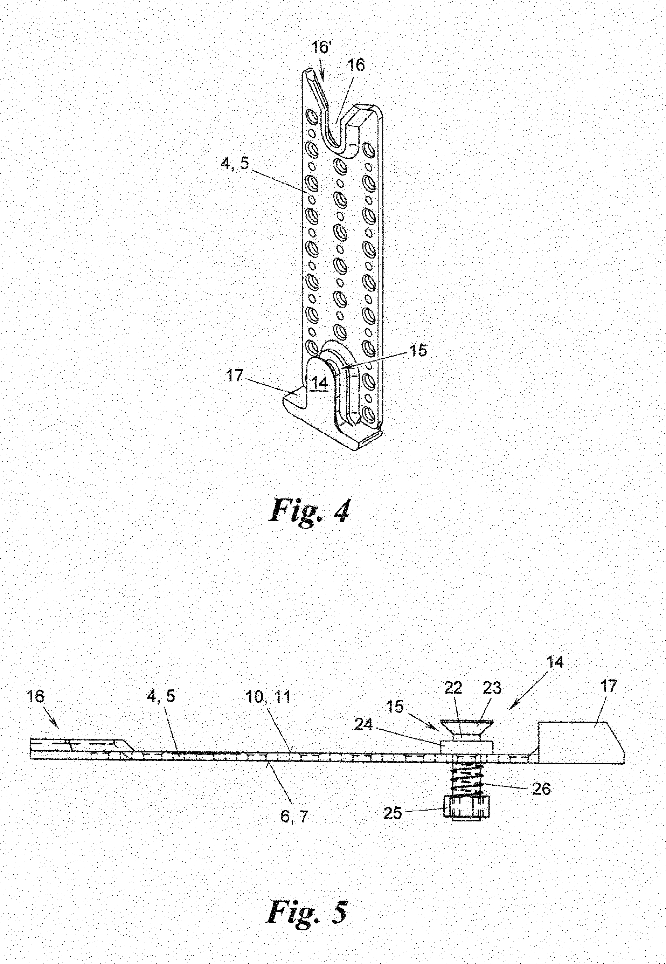

Im Ausführungsbeispiel der Fig. 4 ist die Nase 14 einstückig mit dem Vorsprung 17 ausgebildet, z.B. als Ausbuchtung des Vorsprungs 17 mit Hinterschneidung 15. In diesem Beispiel ist der Vorsprung 17 ferner in seiner für alle Ausführungsformen optionalen Variante ohne Bohrungen 8', 18 gezeigt.

Alternativ dazu ist die Nase 14 in den weiteren dargestellten Beispielen durch einen von der genannten anderen Seite 10, 11 vorspringenden Bolzen 22 gebildet, welcher einen verbreiterten Kopf 23 hat, wodurch zwischen Kopf 23 und anderer Seite 10, 11 die Hinterschneidung 15 gebildet ist. Der Kopf 23 kann z.B. kugelförmig, zylindrisch oder, wie dargestellt, kegelförmig sein. Im Beispiel der Fig. 1a ist der Bolzen 22 am Beschlag 4, 5 angeschweißt; er kann dort alternativ angeschraubt sein.

Fig. 5 zeigt dazu ein Alternativbeispiel, bei welchem der Bolzen 22 axialbeweglich am Beschlag 4, 5 gelagert und dabei mit seinem Kopf 23 gegen die genannte eine Seite 6, 7 des jeweiligen Beschlags 4, 5 federbeaufschlagt ist. In diesem Beispiel durchsetzt der Bolzen 22 beide Seiten 6, 7, 10, 11 des Beschlags 4, 5, hat an der anderen Seite 10, 11 einen Anschlag 24 und an seinem dem Kopf 23 gegenüberliegenden Ende einen Flansch 25 zum Angriff einer zwischen dem Flansch 25 und der einen Seite 6, 7 des Beschlags 4, 5 gespannten Feder 26. Andere Varianten der Federbeaufschlagung eines axialbeweglichen Bolzens 22 sind dem Fachmann bestens bekannt.

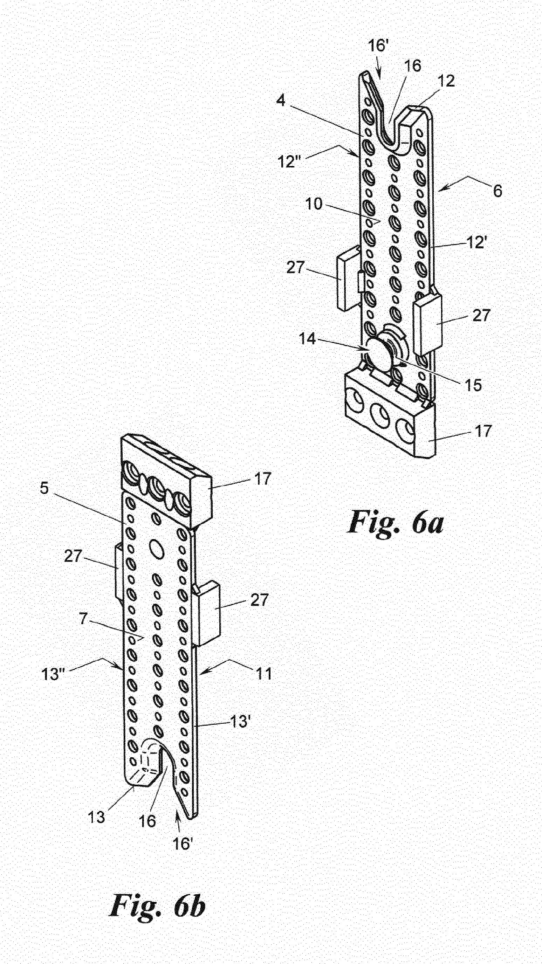

In einer weiteren Ausführungsform gemäß den Fig. 6a und 6b sind die Beschläge 4, 5 im Wesentlichen kongruent und haben zum genannten Schlitz 16 etwa parallele Randabschnitte 12', 12", 13', 13". An den genannten Randabschnitten 12', 12", 13', 13" zumindest eines der Beschläge 4, 5 - hier: beider Beschläge 4, 5 - sind Wangen 27 ausgebildet, zwischen welchen der jeweils andere Beschlag 4, 5 in der im Schlitz 16 verankerten Stellung der Nase 14 seitlich gehalten ist, sodass die Wangen 27 Lateralkräfte zwischen den beiden Beschlägen 4, 5 übertragen. Es versteht sich, dass bei geeigneter spiegelsymmetrischer Ausführung der Beschläge 4, 5 bei gleicher Wirkung auch jeder Beschlag 4, 5 bloß an einem seiner Randabschnitte 12', 12", 13', 13" und nicht an beiden eine Wange 27 haben könnte.

Die Erfindung ist nicht auf die dargestellten Ausführungsformen beschränkt, sondern umfasst alle Varianten, Modifikationen und Kombinationen, die in den Rahmen der angeschlossen Ansprüche fallen.

## Patentansprüche

1. Verbinder für zwei Werkstücke, insbesondere aus Holz, mit einem ersten und einem zweiten Beschlag (4, 5), welche mit ihren einen Seiten (6, 7) an je einem der Werkstücke (2, 3) montierbar und mit ihren anderen Seiten (10, 11) aneinander verankerbar sind und zwischen den einen und den anderen Seiten (6, 7, 10, 11) jeweils einen umlaufenden Rand (12, 13) haben, wobei beide Beschläge (4, 5) identische Form haben oder zueinander spiegelsymmetrisch sind, wobei beide Beschläge (4,5) jeweils an ihren anderen Seiten (10, 11) eine Nase (14) mit einer Hinterschneidung (15) und einen von ihren Rändern (12, 13) ausgehenden, mit der Hinterschneidung (15) korrespondierenden Schlitz (16) zum Verankern der Nase (14) haben, **dadurch gekennzeichnet, dass** beide Beschläge (4, 5) jeweils an ihren anderen Seiten (10, 11) einen quer zur Richtung des Schlitzes (16) verlaufenden Vorsprung (17) zum Anliegen des Randes (12, 13) des jeweils anderen Beschlags (4, 5) in der im Schlitz (16) verankerten Stellung der Nase (14) haben.

2. Verbinder nach Anspruch 1, **dadurch gekennzeichnet, dass** der Vorsprung (17) am jeweiligen Beschlag (4, 5) einstückig ausgeformt oder angeschweißt ist.

3. Verbinder nach Anspruch 1 oder 2, **dadurch gekennzeichnet, dass** der Vorsprung (17) quaderförmig ist und von Bohrungen (8', 18) zur Aufnahme von Schrauben (9, 19) zum Montieren an einem der Werkstücke (2, 3) durchsetzt ist.

4. Verbinder nach Anspruch 3, **dadurch gekennzeichnet, dass** zumindest eine der Bohrungen (18) den Vorsprung (17) unter einem zur einen Seite (6, 7) des jeweiligen Beschlags (4, 5) spitzen Winkel (α) durchsetzt und der Vorsprung (17) eine Fase (20) hat, von welcher diese Bohrung (18) ausgeht.

5. Verbinder nach Anspruch 3 oder 4, **dadurch gekennzeichnet, dass** zumindest eine der Bohrungen (8', 18) an der einen Seite (6, 7) des jeweiligen Beschlags (4, 5) eine zylindrische Erweiterung (21) hat.

6. Verbinder nach einem der Ansprüche 1 bis 5, **dadurch gekennzeichnet, dass** der Vorsprung (17) einstückig mit der Nase (14) ausgebildet ist.

7. Verbinder nach einem der Ansprüche 1 bis 5, **dadurch gekennzeichnet, dass** die Nase (14) durch einen von der genannten anderen Seite (10) vorspringenden Bolzen (22) mit verbreitertem Kopf (23) gebildet ist.

8. Verbinder nach Anspruch 7, **dadurch gekennzeichnet, dass** der Bolzen (22) am jeweiligen Beschlag (4, 5) angeschweißt oder angeschraubt ist.

9. Verbinder nach Anspruch 7, **dadurch gekennzeichnet, dass** der Bolzen (22) axialbeweglich am jeweiligen Beschlag (4, 5) gelagert und mit seinem Kopf (23) gegen die genannte eine Seite (6) des jeweiligen Beschlags (4, 5) federbeaufschlagt ist.

10. Verbinder nach einem der Ansprüche 1 bis 9, **dadurch gekennzeichnet, dass** die Beschläge (4, 5) im Wesentlichen kongruent sind und zum genannten Schlitz (16) etwa parallele Randabschnitte (12', 12", 13', 13") haben, wobei an den Randabschnitten (12', 12", 13', 13") zumindest eines der Beschläge (4, 5) Wangen (27) ausgebildet sind, zwischen welchen der jeweils andere Beschlag (4, 5) in der im Schlitz (16) verankerten Stellung der Nase (14) seitlich gehalten ist.

11. Verbinder nach einem der Ansprüche 1 bis 10, **dadurch gekennzeichnet, dass** der Schlitz (16) eine V-förmige Mündung (16') hat.

## Claims

1. Connector for two workpieces, in particular made of wood, with a first and a second fitting (4, 5), which can be mounted with their one sides (6, 7) on a respective one of the workpieces (2, 3) and can be anchored to one another with their other sides (10, 11) and each have a circumferential edge (12, 13) between the one and the other sides (6, 7, 10, 11), wherein both fittings (4, 5) have an identical shape or are mirror-symmetrical to one another, wherein both fittings (4, 5) each have a projection (14) with an undercut (15) on their other sides (10, 11) and a slot (16) starting from their edges (12, 13) and corresponding to the undercut (15) for anchoring the projection (14), **characterized in that** both fittings (4, 5) each have a protrusion (17) running transversely to the direction of the slot (16) on their other sides (10, 11) for resting of the edge (12, 13) of the respective other fitting (4, 5) when the projection (14) is in its position anchored in the slot (16).

2. Connector according to claim 1, **characterized in that** the protrusion (17) is formed integrally on the respective fitting (4, 5) or is welded thereon.

3. Connector according to claim 1 or 2, **characterized in that** the protrusion (17) is cuboidal and is penetrated by bores (8', 18) for receiving screws (9, 19) for mounting on one of the workpieces (2, 3).

4. Connector according to claim 3, **characterized in that** at least one of the bores (18) penetrates the protrusion (17) at an acute angle (α) to the one side (6, 7) of the respective fitting (4, 5) and the protrusion (17) has a chamfer (20) from which this bore (18) starts.

5. Connector according to claim 3 or 4, **characterized in that** at least one of the bores (8', 18) has a cylindrical widening (21) on the one side (6, 7) of the respective fitting (4, 5) .

6. Connector according to any one of claims 1 to 5, **characterized in that** the protrusion (17) is formed integrally with the projection (14).

7. Connector according to any one of claims 1 to 5, **characterized in that** the projection (14) is formed by a bolt (22) having a widened head (23) and protruding from said other side (10).

8. Connector according to claim 7, **characterized in that** the bolt (22) is welded or screwed on the respective fitting (4, 5).

9. Connector according to claim 7, **characterized in that** the bolt (22) is mounted axially movably on the respective fitting (4, 5) and is spring-loaded with its head (23) against said one side (6) of the respective fitting (4, 5).

10. Connector according to any one of claims 1 to 9, **characterized in that** the fittings (4, 5) are substantially congruent and have edge sections (12', 12", 13', 13") approximately parallel to said slot (16), wherein on the edge sections (12', 12", 13', 13") of at least one of the fittings (4, 5) cheeks (27) are formed, between which the respective other fitting (4, 5) is held laterally when the projection (14) is in its position anchored in the slot (16).

11. Connector according to any one of claims 1 to 10, **characterized in that** the slot (16) has a V-shaped mouth (16').

## Revendications

1. Connecteur pour deux pièces, notamment en bois, avec une première et une seconde ferrure (4, 5), lesquelles peuvent être montées avec leurs uns côtés (6, 7) à l'une des pièces (2, 3) respective et peuvent être ancrées l'une à l'autre avec leurs autres côtés (10, 11) et possèdent respectivement un bord périphérique (12, 13) entre les uns et les autres côtés (6, 7, 10, 11), dans lequel les deux ferrures (4, 5) ont une forme identique ou sont symétriques au miroir l'une par rapport à l'autre, dans lequel les deux ferrures (4, 5) ont respectivement sur leurs autres côtés (10, 11) un nez (14) avec un contredépouille (15) et une fente (16) partant de leurs bords (12, 13) et correspondant avec le contredépouille (15) pour l'ancrage du nez (14), **caractérisé en ce que** les deux ferrures (4, 5) ont respectivement sur leurs autres côtés (10, 11) une protubérance (17) s'étendant perpendiculairement par rapport à la direction de la fente (16) pour l'appui du bord (12, 13) de l'autre ferrure (4, 5) respective quand le nez (14) est dans sa position (14) ancrée dans la fente (16).

2. Connecteur selon la revendication 1, **caractérisé en ce que** la protubérance (17) est formée intégralement sur la ferrure (4, 5) respective ou y est soudée.

3. Connecteur selon la revendication 1 ou 2, **caractérisé en ce que** la protubérance (17) est de forme parallélépipède et est traversée par des alésages (8', 18) pour la réception de vis (9, 19) en vue du montage sur une des pièces (2, 3).

4. Connecteur selon la revendication 3, **caractérisé en ce qu'**au moins un des alésages (18) traverse la protubérance (17) sous un angle (α) aigu par rapport à l'un côté (6, 7) de la ferrure (4, 5) respective et la protubérance a un biseau (20) à partir duquel cet alésage (18) part.

5. Connecteur selon la revendication 3 ou 4, **caractérisé en ce qu'**au moins un des alésages (8', 18) possède un élargissement (21) cylindrique sur l'un côté (6, 7) de la ferrure (4, 5) respective.

6. Connecteur selon l'une des revendications 1 à 5, **caractérisé en ce que** la protubérance (17) est formée intégralement avec le nez (14).

7. Connecteur selon l'une des revendications 1 à 5, **caractérisé en ce que** le nez (14) est formé par un boulon (22) ayant une tête (23) élargie et faisant saillie par rapport audit autre côté (10).

8. Connecteur selon la revendication 7, **caractérisé en ce que** le boulon (22) est soudé ou vissé sur la ferrure (4, 5) respective.

9. Connecteur selon la revendication 7, **caractérisé en ce que** le boulon (22) est monté en étant mobile axialement sur la ferrure (4, 5) respective et chargé à ressort avec sa tête (23) contre ledit un côté (6) de la ferrure (4, 5) respective.

10. Connecteur selon l'une des revendications 1 à 9, **caractérisé en ce que** les ferrures (4, 5) sont essentiellement congruentes et ont des segments de bord (12', 12", 13', 13") à peu près parallèles par rapport à ladite fente (16), dans lequel, au niveau des segments de bord (12', 12", 13', 13") d'au moins une des ferrures (4, 5), des joues (27) sont formées, entre lesquelles l'autre ferrure (4, 5) respective est maintenue latéralement quand le nez (14) est dans sa position ancrée dans la fente (16).

11. Connecteur selon l'une des revendications 1 à 10, **caractérisé en ce que** la fente (16) possède une embouchure (16') en forme de V.
